# EUROPEAN PATENT SPECIFICATION

(11) **EP 3 936 351 B1**
(45) Date of publication and mention of the grant of the patent: **25.10.2023**
(21) Application number: 21181749.9
(22) Date of filing: 25.06.2021
(51) Int. Cl.: B60C 11/03, B60C 11/13

(54) **PNEUMATIC TIRE**
LUFTREIFEN
PNEUMATIQUE

(30) Priority: 06.07.2020 JP 2020116568
(43) Date of publication of application: 12.01.2022
(73) Proprietor: Sumitomo Rubber Industries, Ltd., Kobe-shi, Hyogo-ken 651-0072 (JP)
(72) Inventor: KUJIME, Tomoyuki, Kobe-shi, Hyogo 651-0072 (JP)
(74) Representative: Manitz Finsterwald Patent- und Rechtsanwaltspartnerschaft mbB

(56) References cited:
- EP-A1- 2 138 326
- EP-A1- 3 023 267
- EP-A1- 3 323 638
- JP-A- H09 226 323
- JP-A- 2015 171 841

## Description

### Technical field

The present invention relates to a pneumatic tire, more particularly to a tread pattern.

### Background art

Patent Document 1 below discloses a tire suitably designed for sports running on circuit courses and the like, and at the same time allowed to drive on public roads.
In the tire of Patent Document 1, tread pattern elements of the tread portion are designed to exhibit excellent grip performance even in a situation where the ground contacting pressure acting on the tread portion is low.
Patent Document 1: Japanese Patent Application Publication No. 2019-51863

JP H09226323 A discloses a pneumatic tire comprising the features of the preamble of claim 1.

Further prior art pneumatic tires having an unidirectional tread pattern as well as a single main groove are disclosed in EP 2 138 326 A1 and EP 3 323 638 A1. Prior art pneumatic tires having bidirectional tread pattern and/or comprise plurality of main grooves are disclosed in the following documents JP 2015 171 841 A and EP 3 023 267 A1.

### Summary of the invention

### Problems to be solved by the invention

As the performance of vehicles has improved, tires suitable for sports running such as described above are required to have improved steering stability during high-speed cornering, and at the same time, it is necessary to have sufficient wet performance in order to drive on public roads.

The present invention was made in view of the above circumstances, and an object of the present invention is to provide a pneumatic tire having improved steering stability during high-speed cornering while ensuring good wet performance.

According to the present invention, a pneumatic tire comprises:
a tread portion which has, on each side of the tire equator, a first tread edge, a second tread edge positioned axially inside the first tread edge, and a third tread edge positioned axially inside the second tread edge, wherein
   the first tread edge, the second tread edge and the third tread edge are tread edges occurred when the tire mounted on a regular wheel rim and inflated to a regular pressure is placed on a flat horizontal surface at a camber angle of 0 degree under vertical tire loads of 100%, 75% and 50% of a regular tire load, respectively,
   wherein
the tread portion is provided with a main groove which extends continuously in the tire circumferential direction and is located between the third tread edge and the tire equator, so that a shoulder region is defined between the main groove and the first tread edge,
the shoulder region is provided with a first inclined groove which is inclined with respect to the tire axial direction, and extends so as to intersect with the first tread edge, the second tread edge and the third tread edge, and
the first inclined groove has a groove depth such that the groove depth measured at the first tread edge is smaller than the groove depth measured at the second tread edge and smaller than the groove depth measured at the third tread edge.

It is preferable that the tread portion is provided, on each side of the tire equator, with the above-said main groove, so that the above-said shoulder region is formed on each side of the tire equator, and a crown region is formed between the two shoulder regions.

It is preferable that the tire has an intended tire rotational direction, and the above-said first inclined groove is inclined to an opposite direction to the intended rotational direction toward the outside in the tire axial direction.

It is preferable that the above-said first inclined groove comprises
an outer portion intersecting with the first tread edge, and a main portion having a depth larger than that of the outer portion and intersecting with the second tread edge and the third tread edge.

It is preferable that the angle of the above-said first inclined groove with respect to the tire axial direction measured at the third tread edge is larger than the angle of the above-said first inclined groove with respect to the tire axial direction measured at the first tread edge.

It is preferable that the above-said shoulder region is provided with a second inclined groove which is inclined with respect to the tire axial direction, and intersects with the second tread edge and the third tread edge but does not intersect with the first tread edge.

It is preferable that the above-said second inclined groove comprises a first portion, of which depth is decreased toward the inside in the tire axial direction, and which intersects with the third tread edge.

It is preferable that the above-said second inclined groove comprises a second portion, of which depth is constant along the length direction of the second inclined groove, and which intersects with the second tread edge.

It is preferable that the length in the tire axial direction of the above-said second inclined groove is in a range from 40% to 60% of the length in the tire axial direction of the above-said first inclined groove.

### Brief description of the drawings

Fig. 1 is a developed partial view of the tread portion of a tire as an embodiment of the present invention.
Fig. 2 is a partial top view of a shoulder region of the tire shown in Fig. 1.
Fig. 3 is an enlarged view showing a first inclined groove, a second inclined groove, and a third inclined groove of the tire shown in Fig. 1.
Fig. 4 is a cross-sectional view taken along line A-A of Fig. 2.
Fig. 5 is a cross-sectional view taken along line B-B of Fig. 2.
Fig. 6 is a partial top view of a crown land region of the tire shown in Fig. 1.

### Description of the Preferred Embodiment

An embodiment of the present invention will now be described in detail in conjunction with accompanying drawings.

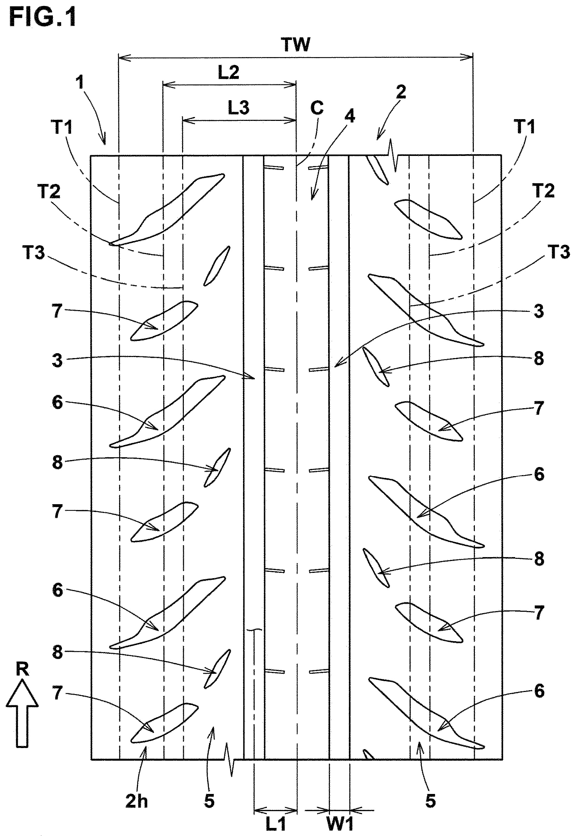

Fig. 1 is a developed view of a tread portion 2 of a pneumatic tire 1 as an embodiment of the present invention.
In the present embodiment, the pneumatic tire 1 is designed for a passenger car so as to exert high performance when making sports driving on circuit courses and the like and at the same time to be allowed to drive on public roads.

In the present embodiment, the tire 1 is provided with a unidirectional tread pattern for which a tire rotational direction R is specified. For example, the tire rotational direction R is indicated by characters, symbols and the like in the sidewall portion (not shown).

The tread portion 2 has first tread edges T1, second tread edges T2, and third tread edges T3 which are defined as follows.

Given that a normal state of the tire is such that the tire is mounted on a regular wheel rim and inflated to a regular pressure,
when the tire in the normal state is set on a flat surface (horizontal surface) at a camber angle of 0 degree, and applied by a regular tire load (vertical load),
the axial outermost edges of a ground contacting patch of the tire are the first tread edges T1.

When the tire in the normal state is set on a flat surface (horizontal surface) at a camber angle of 0 degree, and applied by 75% of the regular tire load (vertical load),
the axial outermost edges of a ground contacting patch of the tire are the second tread edges T2.

When the tire in the normal state is set on a flat surface (horizontal surface) at a camber angle of 0 degree, and applied by 50% of the regular tire load (vertical load),
the axial outermost edges of a ground contacting patch of the tire are the third tread edges T3.

The second tread edges T2 are located between the first tread edges T1. The third tread edge T3 are located one on each side of the tire equator, and between the second tread edges T2.

When the tire 1 is manufactured according to standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used,
the regular wheel rim is a wheel rim officially approved or recommended for the tire by the standards organization, and the regular pressure and the regular tire load are the maximum air pressure and the maximum tire load for the tire specified by the same organization in the Air-pressure/Maximum-load Table or similar list.
For example, the regular wheel rim is the "standard rim" specified in JATMA, the "Measuring Rim" in ETRTO, the "Design Rim" in TRA or the like. The regular pressure is the "maximum air pressure" in JATMA, the "Inflation Pressure" in ETRTO, the maximum pressure given in the "Tire Load Limits at various Cold Inflation Pressures" table in TRA or the like.
The regular tire load is the "maximum load capacity" in JATMA, the "Load Capacity" in ETRTO, the maximum value given in the above-mentioned table in TRA or the like.

If there is no established standards for the tire 1,
the regular wheel rim should be a wheel rim designed or specified by the tire manufacture and the like so that the tire fully demonstrate its performance according to the purpose of use of the tire,
the regular pressure should be a pressure designed or specified by the tire manufacture and the like so that the tire fully demonstrate its performance according to the purpose of use of the tire, and
the regular tire load should be a load acting on the tire in a standard mounted state of the tire, wherein the "standard mounted state" refers to a state in which the tire is mounted on a standard vehicle according to the purpose of use of the tire and the vehicle is stationary on a flat road surface and ready for travel.

The tread portion 2 is provided with main grooves extending continuously in the tire circumferential direction.

In the present embodiment, a single main groove 3 is disposed between one of the third tread edge T3 and the tire equator C, and a single main groove 3 is disposed between the other of the third tread edge T3 and the tire equator C.

In the present embodiment, the two main grooves 3 are straight grooves extending parallel with the tire circumferential direction. However, the main grooves 3 are not limited to such a straight groove. For example, each main groove 3 may extend in a wavy or zigzag shape.

For example, the axial distance L1 from the tire equator C to the widthwise center line of each of the main grooves 3 is set in a range from 5% to 20% of the tread width TW.

Here, the tread width TW is the distance in the tire axial direction from one of the first tread edges T1 to the other of the first tread edges T1 measured in the normal state.

The groove width W1 of each of the main grooves 3 is, for example, set in a range from 4.0% to 7.0% of the tread width TW. For example, the groove depth of each of the main grooves 3 is set in a range from 5 to 10 mm. However, the dimensional ranges for the main grooves 3 are not limited to such ranges.

The tread portion 2 is divided into three regions: one crown region 4 between the two main grooves 3, and two shoulder regions 5 between the two main grooves 3 and the first tread edges T1. Accordingly, each of tread halves 2h of the tread portion 2 between the tire equator C and one of the first tread edges T1, comprises one main groove 3 and one shoulder region 5.

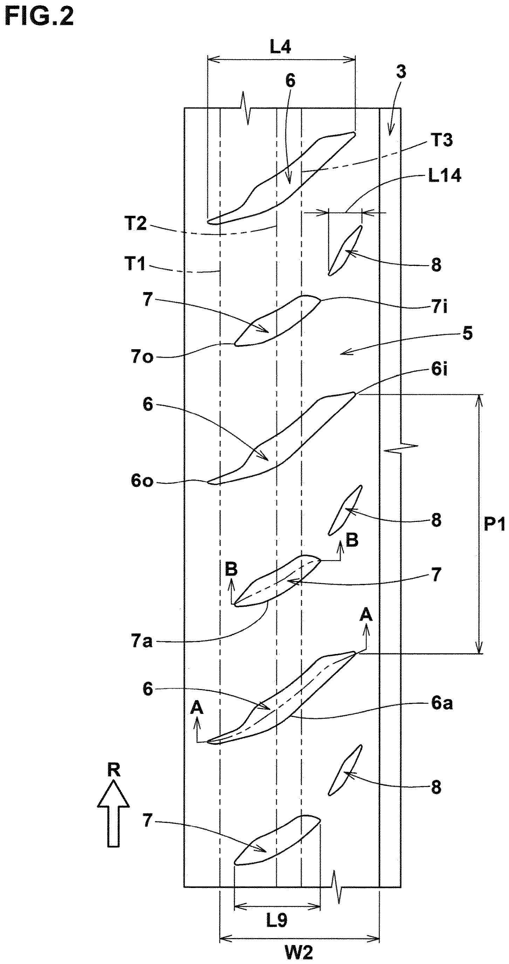

Fig. 2 is a partial top view of one of the shoulder regions 5. As shown, the shoulder region 5 is provided with a first inclined groove 6 inclined with respect to the tire axial direction. In the present embodiment, a plurality of the first inclined grooves 6 are arranged at intervals in the tire circumferential direction.

The first inclined groove 6 intersects with the first tread edge T1, the second tread edge T2, and the third tread edge T3. And the depth of the first inclined groove 6 measured at the axial position of the first tread edge T1 is smaller than the depth of the first inclined groove 6 measured at the axial position of the second tread edge T2, and smaller than the depth of the first inclined groove 6 measured at the axial position of the third tread edge T3.
Thereby, the tire 1 can be improved in the steering stability during high-speed cornering (hereinafter, may be simply referred to as the "steering stability") while ensuring wet performance. The reason for this is presumed as follows.

Even in a situation where the ground contact pressure is relatively low (for example, in the tire positioned on the inside during cornering, in the tire of the rear wheel of the FF car, etc.),
since the first inclined grooves 6 extend axially so as to intersect with the first, second and third tread edges,
the first inclined grooves 6 exert a sufficient drainage effect, and as a result, the wet performance is ensured.

On the other hand, since the depth of the first inclined groove 6 at the first tread edge T1 is smaller than the depth at the second tread edge T2 and the depth at the third tread edge T3, the rigidity near the first tread edge T1 is relatively increased, and as a result, the steering stability during high-speed cornering is improved.

In the present embodiment, the distance L2 in the tire axial direction from the tire equator C to each of the second tread edges T2 is in a range from 35% to 45% of the tread width TW, and
the distance L3 in the tire axial direction from the tire equator C to each of the third tread edges T3 is in a range from 25% to 35% of the tread width TW.
Incidentally, the axial positions of the second tread edges T2 and third tread edges T3 can be adjusted by changing dimensions, arrangement positions, number and the like of tire members such as the rubber thickness of the tread portion, the arrangement of tread reinforcing layers.

In the present embodiment, pitch lengths P1 in the tire circumferential direction between the first inclined grooves 6 (shown in Fig. 2), are larger than the width W2 in the tire axial direction of the shoulder region 5.
Specifically, the pitch lengths P1 are set in a range from 1.20 to 2.00 times the width W2 of the shoulder region 5.
Such first inclined grooves 6 improves the wet performance and the steering stability in a well-balanced manner.

In the present embodiment, the length L4 in the tire axial direction of each of the first inclined grooves 6 is set in a range from 85% to 95% of the width W2 of the shoulder region 5.
The first inclined grooves 6 are inclined to a direction opposite to the tire rotational direction R toward the outside in the tire axial direction. Hereinafter, such inclining direction of the first inclined grooves 6 may be expressed as "inclined to the first direction with respect to the tire axial direction".

In the present embodiment, the first inclined groove 6 has a groove edge which is curved convexly toward the opposite direction to the tire rotational direction R to have only one apex 6a of the curvature. The apex 6a means a farthest point from a virtual straight line drawn between the axially inner end 6i and the axially outer end 60 of the first inclined groove 6.

In this application, the angle of a groove means that of the widthwise center line of the groove unless otherwise noted.

The angle of the first inclined groove 6 with respect to the tire axial direction is, for example, set in a range from 10 to 45 degree.
In the present embodiment, the angle of the first inclined groove 6 measured at the axial position of the third tread edge T3 with respect to the tire axial direction is larger than
the angle of the first inclined groove 6 measured at the axial position of the first tread edge T1 with respect to the tire axial direction.
More specifically, the angle at the first tread edge T1 is in a range from 25% to 35% of the angle at the third tread edge T3. Such first inclined grooves 6 help to improve traction performance and cornering performance on wet roads in a well-balanced manner.

In the present embodiment, each of the shoulder regions 5 is provided with second inclined grooves 7 and third inclined grooves 8 in addition to the first inclined grooves 6.

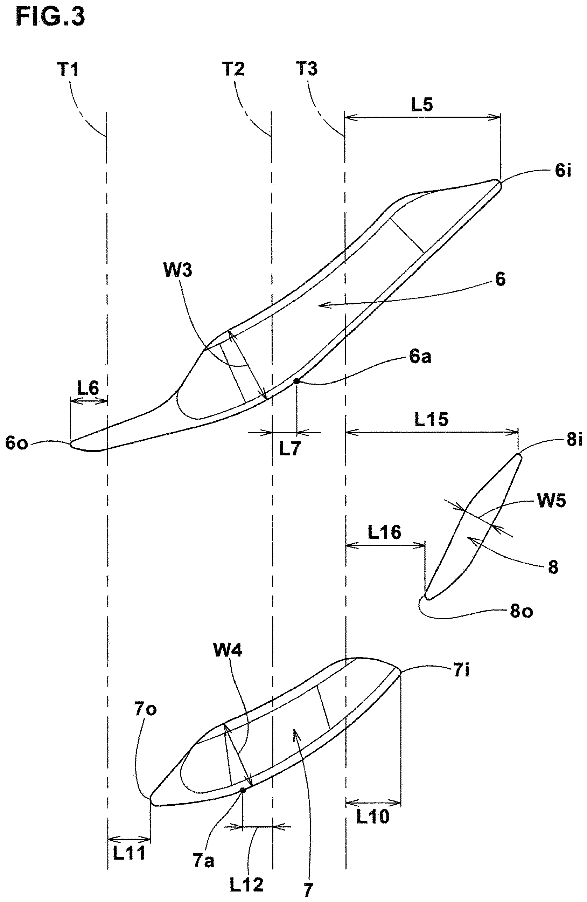

As shown in Fig. 3, the axially inner end 6i of the first inclined groove 6 is terminated within the shoulder region 5, and the distance L5 in the tire axial direction from the axially inner end 6i to the third tread edge T3 is in a range from 25% to 35% of the width W2 in the tire axial direction of the shoulder region 5. Such first inclined grooves 6 help to improve drainage performance even in a situation where the ground pressure is low.

The axially outer end 60 of the first inclined groove 6 is terminated on the axially outer side of the first tread edge T1, and the distance L6 in the tire axial direction from the axially outer end 6o to the first tread edge T1 is preferably smaller than the above-mentioned distance L5 and smaller than the groove width W1 of the main groove 3. Preferably, the distance L6 is in a range from 5% to 10% of the width W2 of the shoulder region 5. As a result, the first inclined grooves 6 help to improve steering stability while ensuring wet performance.

In this embodiment, the distance L7 in the tire axial direction from the above-mentioned apex 6a of the curvature to the second tread edge T2 is preferably not more than 15%, more preferably not more than 10% of the width W2 of the shoulder region 5.

The first inclined groove 6 has a widest portion where its maximum groove width W3 lies, and
the groove width of the first inclined groove 6 becomes decreased from the widest portion toward the axially inner end 6i and toward the axially outer end 6o.
The maximum groove width W3 is, for example, set in a range from 80% to 120% of the groove width W1 of the main groove 3.
Such first inclined grooves 6 help to improve the wet performance and steering stability in a well-balanced manner.

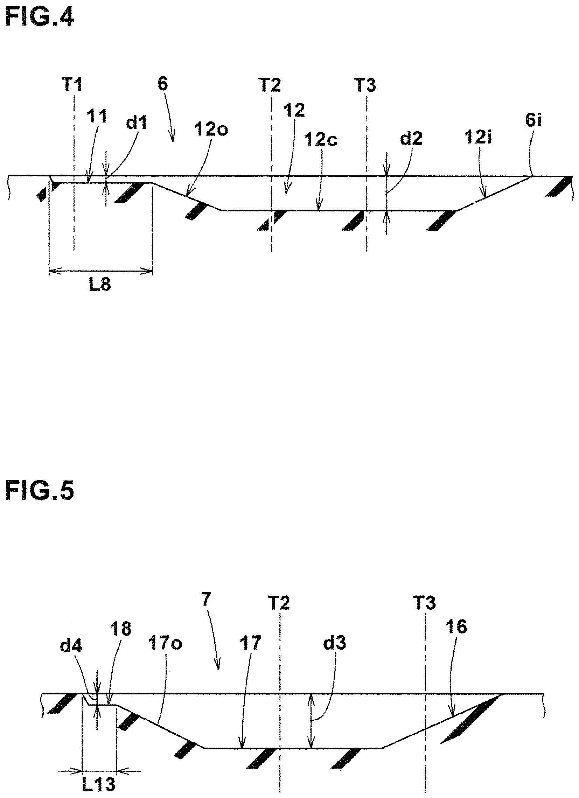

Fig. 4 is a cross-sectional view taken along line A-A of Fig. 2, showing the cross-sectional shape of the first inclined groove 6.
As shown, the first inclined groove 6 comprises
an axially outer portion 11 intersecting with the first tread edge T1, and
a main portion 12 intersecting with the second tread edge T2 and the third tread edge T3.

The axially outer portion 11 has a groove depth d1 in a range from 0.5 to 2.0 mm, preferably 0.8 to 1.2 mm.
The axially outer portion 11 has a length L8 in the tire axial direction in a range from 15% to 25% of the above-mentioned length L4 in the tire axial direction of the first inclined groove 6. Thereby, the steering stability during high-speed cornering can be improved.

In the present embodiment, the length in the tire axial direction of a part of the axially outer portion 11 which part exists axially inside the first tread edge T1 is greater than the length in the tire axial direction of a part of the axially outer portion 11 which part exists axially outside the first tread edge T1. As a result, the rigidity in the vicinity of the first tread edge T1 is improved, and the steering response during high-speed cornering becomes linear.

The groove depth of the first inclined groove 6 is larger in the main portion 12 than in the axially outer portion 11. The maximum groove depth d2 in the main portion 12 is, for example, in a range from 30% to 80% of the groove depth of the main groove 3. As a result, the wet performance is ensured while maintaining the rigidity of the shoulder region 5.

In the present embodiment, the main portion 12 of the first inclined groove 6 comprises a central constant depth portion 12c, an axially outer inclined bottom portion 120, and an axially inner inclined bottom portion 12i.
The central constant depth portion 12c extends in the length direction of the first inclined groove 6 at a constant depth. The groove depth in the axially outer inclined bottom portion 12o gradually decreases from the central constant depth portion 12c toward the axially outer portion 11.
The groove depth of the axially inner inclined bottom portion 12i gradually decreases from the central constant depth portion 12c toward the axially inner end 6i of the first inclined groove 6.
In this example, the central constant depth portion 12c intersects with the second tread edge T2 and the third tread edge T3. This ensures good wet performance.
In Fig. 3, thin lines show: boundary lines between the axially outer portion 11, the axially outer inclined bottom portion 12o, the central constant depth portion 12c and the axially inner inclined bottom portion 12i; and radially inner edges of chamfers provided along the groove edges.

In each of the shoulder regions 5 in the present embodiment, as shown in Fig. 2, one first inclined groove 6, and one pair of the second inclined groove 7 and the third inclined groove 8 are alternately arranged in the tire circumferential direction.

In the present embodiment, the circumferential extent of the second inclined groove 7 does not overlap with the circumferential extent of the first inclined groove 6 in the tire circumferential direction.
As to the axial extent of the second inclined groove 7, on the other hand, the second inclined groove 7 intersects with the second tread edge T2 and the third tread edge T3, but does not intersect with the first tread edge T1.
And the length L9 in the tire axial direction of the second inclined groove 7 is in a range from 40% to 60% of the length L4 in the tire axial direction of the first inclined groove 6. Further, the axially inner end 7i of the second inclined groove 7 is terminated within the shoulder region 5.
Such second inclined grooves 7 can further improve the wet performance in cooperation with the first inclined grooves 6.

The second inclined grooves 7 are each inclined to the first direction with respect to the tire axial direction.
The angles of the second inclined grooves 7 with respect to the tire axial direction are, for example, set in a range from 15 to 45 degrees.

The second inclined groove 7 has a groove edge which is curved convexly toward the opposite direction to the tire rotational direction R to have only one apex 7a of the curvature.
The apex 7a means a farthest point from a virtual straight line drawn between the axially inner end 7i and the axially outer end 7o of the second inclined groove 7.

As shown in Fig. 3, the distance L10 in the tire axial direction from the axially inner end 7i of the second inclined groove 7 to the third tread edge T3 is smaller than the distance L5 in the tire axial direction from the axially inner end 6i to the third tread edge T3. And the distance L10 is in a range from 5% to 20% of the width W2 of the shoulder region 5. Such second inclined grooves 7 can improve drainage performance even when the ground pressure is low.

The axially outer ends 7o of the second inclined grooves 7 are located between the first tread edge T1 and the second tread edge T2.

Preferably, the distance L11 in the tire axial direction from the axially outer end 7o to the first tread edge T1 is smaller than the groove width W1 of the main grooves 3. And the distance L11 is in a range from 5% to 15% of the width W2 of the shoulder region 5. As a result, the wet performance can be further improved.

Preferably, the distance L12 in the tire axial direction from the second tread edge T2 to the above-mentioned apex 7a of the second inclined groove 7 is not more than 10%, preferably not more than 5% of the width W2 of the shoulder region 5.

The second inclined groove 7 has a widest portion where its maximum groove width W4 lies, and the groove width of the second inclined groove 7 becomes decreased from the widest portion toward the axially inner end 7i and toward the axially outer end 7o. The maximum groove width W4 is, for example, 80% to 120% of the groove width W1 of the main grooves 3.
Such second inclined grooves 7 can improve the drainage performance while maintaining the rigidity of the shoulder regions 5.

Fig. 5 is a cross-sectional view taken along line B-B of Fig. 2, showing the cross-sectional shape of the second inclined groove 7. As shown in Fig. 4, the second inclined groove 7 comprises a first portion 16 intersecting with the third tread edge T3, a second portion 17 intersecting with the second tread edge T2, and a third portion 18.

The first portion 16 has a groove depth gradually decreasing toward the axially inside.

The second portion 17 has a constant groove depth d3 along the length direction of the second inclined groove 7.
The groove depth d3 is, for example, in a range from 30% to 80% of the groove depth of the main groove 3. Such second portions 17 can improve the wet performance and steering stability in a well-balanced manner.

The third portion 18 is positioned axially outside the second portion 17, and has a groove depth smaller than that of the second portion 17.
Between the second portion 17 and the third portion 18 in the present embodiment, there is formed an inclined bottom portion 17o in which the groove depth is decreased from the second portion 17 to the third portion 18.
The groove depth d4 in the third portion 18 is, for example, set in a range from 0.5 to 2.0 mm, preferably 0.8 to 1.2 mm.
The length L13 in the tire axial direction of the third portion 18 is, for example, set in a range from 5% to 15% of the length L9 in the tire axial direction of the second inclined groove 7. Such third portions 18 help to improve the wet performance and steering stability in a well-balanced manner.

In this embodiment, in order to further enhance the above-described effects, the third inclined grooves 8 are disposed between the third tread edge T3 and the main groove 3 as shown in Fig. 2. Both ends of the third inclined groove 8 are terminated within the shoulder region 5.
The length L14 in the tire axial direction of the third inclined groove 8 is, for example, set in a range from 15% to 25% of the width W2 of the shoulder region 5.

It is preferable that the circumferential extent of the third inclined groove 8 does not overlap with the circumferential extent of the adjacent second inclined groove 7 in the tire circumferential direction. Such third inclined grooves 8 help to suppress uneven wear of the shoulder region 5 while allowing to exert the above-described effects.

It is preferable that the circumferential extent of the third inclined groove 8 does not overlap with the circumferential extent of the first inclined groove 6 in the tire circumferential direction.

The third inclined grooves 8 are each inclined to the first direction with respect to the tire axial direction.
The angles of the second inclined grooves 7 with respect to the tire axial direction are, for example, set in a range from 50 to 70 degrees. In terms of the inclination angle with respect to the tire axial direction, the third inclined grooves 8 are larger than the first inclined grooves 6 and the second inclined grooves 7 in the present embodiment.

As shown in Fig. 3, the distance L15 in the tire axial direction from the axially inner end 8i of the third inclined groove 8 to the third tread edge T3 is larger than the distance L5 in the tire axial direction from the axially inner end 6i to the third tread edge T3. And the distance L15 is, for example, set in a range from 30% to 40% of the width W2 in the tire axial direction of the shoulder region 5.
As a result, during running in wet conditions, water is guided by the third inclined grooves 8 toward the second inclined grooves 7, to exert higher drainage performance.

The axially outer ends 8o of the third inclined grooves 8 are positioned axially outside the axially inner ends 6i of the first inclined grooves 6, and axially inside the axially inner ends 7i of the second inclined grooves 7.
The distance L16 in the tire axial direction from the axially outer end 8o of the third inclined groove 8 to the third tread edge T3 is, for example, set in a range from 10% to 20% of the width W2 of the shoulder region 5.
Such third inclined grooves 8 can further improve the drainage performance improved by the first inclined grooves 6 and the second inclined grooves 7.

The groove width of the third inclined groove 8 in this embodiment is decreased from its central portion in the length direction toward the axially inner end 8i and the axially outer end 8o.
The maximum groove width W5 of the third inclined groove 8 is smaller than the maximum groove width of the main groove 3,
the maximum groove width of the first inclined groove 6, and the maximum groove width of the second inclined groove 7.
In this embodiment, the maximum groove width W5 is in a range from 30% to 50% of the groove width W1 of the main groove 3. Such third inclined grooves 8 can improve the drainage performance without impairing the steering stability.

In order to reliably prevent the steering stability from deteriorating, it is preferred to make the maximum groove depth of the third inclined groove 8 smaller than the maximum groove depth of the first inclined groove 6, and smaller than the maximum groove depth of the second inclined groove 7.
In the present embodiment, the groove depth of the third inclined groove 8 is set in a range from 0.5 to 2.0 mm, preferably 0.8 to 1.2 mm, and is constant along the length direction thereof.

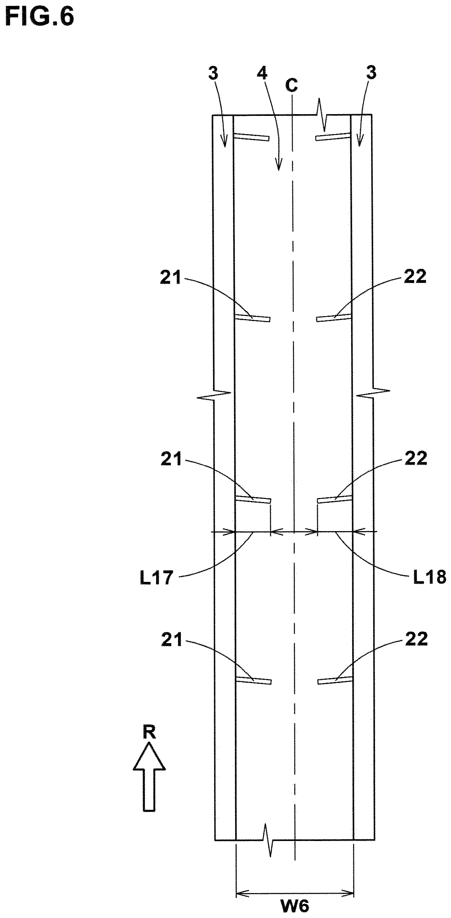

Fig. 6 is a partial top view of the crown region 4.
The width W6 in the tire axial direction of the crown region 4 is, for example, set in a range from 15% to 25% of the tread width TW.

Preferably, the crown region 4 is provided with sipes including first sipes 21 and second sipes 22. The widths of the sipes are preferably 0.3 to 1.2 mm, more preferably 0.5 to 1.0 mm.

Here, the term "sipe" means a narrow groove having a groove width of not more than 1.5 mm inclusive of a cut having no substantial width.
In this application, however, in a cross section of a groove perpendicular to the longitudinal direction of the groove, even if the groove has a portion where the width is more than 1.5 mm, as far as a portion of the groove where the width is not more than 1.5 mm extends over 50% or more of the total groove depth, such groove is treated as a "sipe" (sipe with a wide portion). On the other hand, in a cross section of a groove perpendicular to the longitudinal direction of the groove, even if the groove has a portion where the width is not more than 0.6 mm, as far as a portion of the groove where the width is more than 1.5 mm extends over 50% or more of the total groove depth, such groove is treated as a "groove" (groove with a narrow portion).

The first sipe 21 extends from one of the main grooves 3 and is terminated within the crown region 4.
The second sipe 22 extends from the other of the main grooves 3 and is terminated within the crown region 4.
The length L17 in the tire axial direction of the first sipe 21 and the length L18 in the tire axial direction of the second sipe 22 are in a range from 25% to 35% of the width W6 in the tire axial direction of the crown region 4. As a result, the crown region 4 has a portion continuous in the tire circumferential direction.
The first sipes 26 and the second sipes 27 can improve the wet performance and steering stability in a well-balanced manner.

Each of the first sipes 21 and the second sipes 22 is inclined to the direction opposite to the tire rotational direction Rc while extending from the main groove 3 toward the tire equator C.
The angles of the first sipes 21 and the second sipes 22 are not more than 10 degrees with respect to the tire axial direction. This helps to improve the traction performance on wet roads.

In this embodiment, as shown in Fig. 1, the groove arrangement in one of the two shoulder regions 5 is shifted in the tire circumferential direction from the groove arrangement in the other of the two shoulder regions 5, otherwise the groove arrangement in the two shoulder regions 5 is line symmetric with respect to the tire equator C. The present invention is however, not limited to such arrangement.

In this embodiment, as shown in Fig. 1, the first sipes 21 and the second sipes 22 are arranged line symmetric with respect to the tire equator C. The present invention is however, not limited to such sipe arrangement.

While detailed description has been made of a preferable embodiment of the present invention, the present invention can be embodied in various forms without being limited to the illustrated embodiment.

### Comparison tests

Based on the tread pattern shown in Fig. 1, pneumatic tires of size 205/55R16 were experimentally manufactured as test tires (Working example tires E×1-E×9 and Comparative example tire Ref).

In the comparative example tire, each first inclined groove had a same groove depth at axial positions of the first tread edge, second tread edge and third tread edge.

Specifications of the test tires are shown in Table 1. Except for the above, the test tires had the same structure.

The test tires were tested for steering stability during high-speed cornering and wet performance as follows.

### < Steering stability during high-speed cornering >

Test tires were mounted on all wheels of a test car and run on a dry road surface of a test circuit course, and the steering stability at the time of high-speed cornering was evaluated by the test driver.
Test car: 2000cc FR drive car
Rim size: 16×6.5J
Tire pressure: 230 kPa
The test results are indicated in Table 1 by an index based on the comparative example Ref being 100, wherein the larger the value, the better the steering stability at the time of high-speed cornering.

### < Wet performance >

Using the above-mentioned test car, wet performance when running on wet road surfaces of general roads was evaluated by the test driver.
The test results are indicated in Table 1 by an index based on the comparative example Ref being 100, wherein the larger the value, the better the wet performance.

**Table 1**

| tire | | Ref | Ex1 | Ex2 | Ex3 | Ex4 | Ex5 | Ex6 | Ex7 | Ex8 | Ex9 |
|---|---|---|---|---|---|---|---|---|---|---|---|
| depth of first inclined groove | | | | | | | | | | | |
| | at first tread edge (mm) | 5.0 | 1.0 | 0.5 | 1.5 | 2.0 | 2.5 | 1.0 | 1.0 | 1.0 | 1.0 |
| | at second tread edge (mm) | 5.0 | 5.0 | 5.0 | 5.0 | 5.0 | 5.0 | 4.0 | 4.5 | 5.5 | 6.0 |
| | at third tread edge (mm) | 5.0 | 5.0 | 5.0 | 5.0 | 5.0 | 5.0 | 4.0 | 4.5 | 5.5 | 6.0 |
| steering stability | | 100 | 110 | 110 | 110 | 108 | 105 | 112 | 110 | 108 | 106 |
| wet performance | | 100 | 100 | 99 | 100 | 100 | 100 | 98 | 99 | 100 | 101 |

From the test results, it was confirmed that the tires according to the present invention were improved in the steering stability during high-speed cornering without sacrificing the wet performance.

### Description of the reference signs

- 2: tread portion
- 3: main groove
- 5: shoulder region
- 6: first inclined groove
- T1: first tread edge
- T2: second tread edge
- T3: third tread edge

## Claims

1. A pneumatic tire comprising:
a tread portion (2) which has, on each side of the tire equator (C), a first tread edge (T1), a second tread edge (T2) positioned axially inside the first tread edge (T1), and a third tread edge (T3) positioned axially inside the second tread edge (T2), wherein
the first tread edge (T1), the second tread edge (T2) and the third tread edge (T3) are tread edges occurred when the tire mounted on a regular wheel rim and inflated to a regular pressure is placed on a flat surface at a camber angle of 0 degree under tire loads of 100%, 75% and 50% of a regular tire load, respectively,
wherein
the tread portion (2) is provided with a main groove (3) which extends continuously in the tire circumferential direction and is located between the third tread edge (T3) and the tire equator (C), so that a shoulder region (5) is defined between the main groove (3) and the first tread edge (T1),
**characterized in that**
the shoulder region (5) is provided with a first inclined groove (6) which is inclined with respect to the tire axial direction, and extends so as to intersect with the first tread edge (T1), the second tread edge (T2) and the third tread edge (T3), and
the first inclined groove (6) has a depth such that the depth measured at the first tread edge (T1) is smaller than the depth measured at the second tread edge (T2) and smaller than the depth measured at the third tread edge (T3).

2. The pneumatic tire according to claim 1, wherein
the tread portion (2) is provided, on each side of the tire equator, with said main groove (3), so that said shoulder region (5) is formed on each side of the tire equator, and a crown region (4) is formed between the two shoulder regions.

3. The pneumatic tire according to claim 1 or 2, wherein
the tire has an intended tire rotational direction, and said first inclined groove (6) is inclined to an opposite direction to the intended rotational direction toward the outside in the tire axial direction.

4. The pneumatic tire according to claim 1, 2 or 3, wherein
said first inclined groove (6) comprises an outer portion (11) intersecting with the first tread edge (T1), and
a main portion (12) having a depth (d) larger than that of the outer portion (11) and intersecting with the second tread edge (T2) and the third tread edge (T3).

5. The pneumatic tire according to claim 1, 2, 3 or 4,
wherein an angle of said first inclined groove (6) with respect to the tire axial direction measured at the third tread edge (T3) is larger than an angle of said first inclined groove (6) with respect to the tire axial direction measured at the first tread edge (T1).

6. The pneumatic tire according to any one of claims 1 to 5, wherein said shoulder region (5) is provided with a second inclined groove (7) which is inclined with respect to the tire axial direction, and intersects with the second tread edge (T2) and the third tread edge (T3) but does not intersect with the first tread edge (T1).

7. The pneumatic tire according to claim 6, wherein
said second inclined groove (6) comprises a first portion (16), in which the groove depth is decreased toward the inside in the tire axial direction, and which intersects with the third tread edge (T3).

8. The pneumatic tire according to claim 6 or 7, wherein
said second inclined groove (7) comprises a second portion (17), in which the groove depth is constant along the length direction of the second inclined groove (7), and which intersects with the second tread edge (T2).

9. The pneumatic tire according to any one of claims 6 to 8, wherein the length in the tire axial direction of said second inclined groove (7) is in a range from 40% to 60% of the length in the tire axial direction of said first inclined groove (6).

## Patentansprüche

1. Luftreifen, umfassend:
einen Laufflächenabschnitt (2), der auf jeder Seite des Reifenäquators (C) eine erste Laufflächenkante (T1), eine zweite Laufflächenkante (T2), die axial innen von der ersten Laufflächenkante (T1) positioniert ist, und eine dritte Laufflächenkante (T3) aufweist, die axial innen von der zweiten Laufflächenkante (T2) positioniert ist, wobei
die erste Laufflächenkante (T1), die zweite Laufflächenkante (T2) und die dritte Laufflächenkante (T3) Laufflächenkanten sind, die auftreten, wenn der Reifen, der auf eine normale Radfelge montiert und auf einen normalen Druck aufgepumpt ist, auf einer flachen Oberfläche mit einem Sturzwinkel von 0 Grad unter Reifenlasten von 100 %, 75 % bzw. 50 % einer normalen Reifenlast gesetzt wird,
wobei
der Laufflächenabschnitt (2) mit einer Hauptrille (3) versehen ist, die sich kontinuierlich in der Reifenumfangsrichtung erstreckt und zwischen der dritten Laufflächenkante (T3) und dem Reifenäquator (C) angeordnet ist, so dass ein Schulterbereich (5) zwischen der Hauptrille (3) und der ersten Laufflächenkante (T1) definiert ist,
**dadurch gekennzeichnet, dass**
der Schulterbereich (5) mit einer ersten geneigten Rille (6) versehen ist, die in Bezug auf die Reifenaxialrichtung geneigt ist und sich so erstreckt, dass sie die erste Laufflächenkante (T1), die zweite Laufflächenkante (T2) und die dritte Laufflächenkante (T3) schneidet, und
die erste geneigte Rille (6) eine solche Tiefe aufweist, dass die an der ersten Laufflächenkante (T1) gemessene Tiefe kleiner ist als die an der zweiten Laufflächenkante (T2) gemessene Tiefe und kleiner ist als die an der dritten Laufflächenkante (T3) gemessene Tiefe.

2. Luftreifen nach Anspruch 1, wobei der Laufflächenabschnitt (2) auf jeder Seite des Reifenäquators mit der Hauptrille (3) versehen ist, so dass der Schulterbereich (5) auf jeder Seite des Reifenäquators gebildet ist und ein Kronenbereich (4) zwischen den beiden Schulterbereichen gebildet ist.

3. Luftreifen nach Anspruch 1 oder 2, wobei
der Reifen eine vorgesehene Reifendrehrichtung aufweist, und
die erste geneigte Rille (6) in eine Richtung, die der vorgesehenen Drehrichtung entgegengesetzt ist, in der Reifenaxialrichtung nach außen geneigt ist.

4. Luftreifen nach Anspruch 1, 2 oder 3, wobei die erste geneigte Rille (6) umfasst
einen äußeren Abschnitt (11), der die erste Laufflächenkante (T1) schneidet, und
einen Hauptabschnitt (12), der eine Tiefe (d) aufweist, die größer ist als die des äußeren Abschnitts (11), und der die zweite Laufflächenkante (T2) und die dritte Laufflächenkante (T3) schneidet.

5. Luftreifen nach Anspruch 1, 2, 3 oder 4, wobei ein Winkel der ersten geneigten Rille (6) in Bezug auf die Reifenaxialrichtung, gemessen an der dritten Laufflächenkante (T3), größer ist als ein Winkel der ersten geneigten Rille (6) in Bezug auf die Reifenaxialrichtung, gemessen an der ersten Laufflächenkante (T1).

6. Luftreifen nach einem der Ansprüche 1 bis 5, wobei der Schulterbereich (5) mit einer zweiten geneigten Rille (7) versehen ist, die in Bezug auf die Reifenaxialrichtung geneigt ist und die zweite Laufflächenkante (T2) und die dritte Laufflächenkante (T3) schneidet, aber die erste Laufflächenkante (T1) nicht schneidet.

7. Luftreifen nach Anspruch 6, wobei die zweite geneigte Rille (6) einen ersten Abschnitt (16) umfasst, in dem die Rillentiefe in der Reifenaxialrichtung nach innen hin abnimmt, und der die dritte Laufflächenkante (T3) schneidet.

8. Luftreifen nach Anspruch 6 oder 7, wobei die zweite geneigte Rille (7) einen zweiten Abschnitt (17) umfasst, in dem die Rillentiefe entlang der Längsrichtung der zweiten geneigten Rille (7) konstant ist, und der die zweite Laufflächenkante (T2) schneidet.

9. Luftreifen nach einem der Ansprüche 6 bis 8, wobei die Länge der zweiten geneigten Rille (7) in der Reifenaxialrichtung in einem Bereich von 40 % bis 60 % der Länge der ersten geneigten Rille (6) in der Reifenaxialrichtung liegt.

## Revendications

1. Bandage pneumatique comprenant :
une partie de bande de roulement (2) qui a, de chaque côté de l'équateur de pneumatique (C), un premier bord de bande de roulement (T1), un deuxième bord de bande de roulement (T2) positionné axialement à l'intérieur du premier bord de bande de roulement (T1), et un troisième bord de bande de roulement (T3) positionné axialement à l'intérieur du deuxième bord de bande de roulement (T2), dans lequel
le premier bord de bande de roulement (T1), le deuxième bord de bande de roulement (T2) et le troisième bord de bande de roulement (T3) sont des bords de bande de roulement apparus lorsque le pneumatique monté sur une jante de roue ordinaire et gonflé à une pression ordinaire est placé sur une surface plane à un angle de carrossage de 0 degré sous des charges de pneumatique de 100 %, 75 % et 50 % d'une charge de pneumatique ordinaire, respectivement, dans lequel
la partie de bande de roulement (2) est pourvue d'une rainure principale (3) qui s'étend en continu dans la direction circonférentielle de pneumatique et est située entre le troisième bord de bande de roulement (T3) et l'équateur de pneumatique (C), de sorte qu'une zone d'épaulement (5) est définie entre la rainure principale (3) et le premier bord de bande de roulement (T1),
**caractérisé en ce que**
la zone d'épaulement (5) est pourvue d'une première rainure inclinée (6) qui est inclinée par rapport à la direction axiale de pneumatique, et s'étend de manière à couper le premier bord de bande de roulement (T1), le deuxième bord de bande de roulement (T2) et le troisième bord de bande de roulement (T3), et
la première rainure inclinée (6) a une profondeur telle que la profondeur mesurée sur le premier bord de bande de roulement (T1) est plus petite que la profondeur mesurée sur le deuxième bord de bande de roulement (T2) et plus petite que la profondeur mesurée sur le troisième bord de bande de roulement (T3).

2. Bandage pneumatique selon la revendication 1, dans lequel la partie de bande de roulement (2) est pourvue, de chaque côté de l'équateur de pneumatique, de ladite rainure principale (3), de sorte que ladite zone d'épaulement (5) est formée de chaque côté de l'équateur de pneumatique, et une zone de sommet (4) est formée entre les deux régions d'épaulement.

3. Bandage pneumatique selon la revendication 1 ou 2, dans lequel le pneumatique a un sens de rotation de pneumatique voulu, et ladite première rainure inclinée (6) est inclinée dans une direction opposée au sens de rotation voulu vers l'extérieur dans la direction axiale de pneumatique.

4. Bandage pneumatique selon la revendication 1, 2 ou 3, dans lequel ladite première rainure inclinée (6) comprend
une partie extérieure (11) coupant le premier bord de bande de roulement (T1), et
une partie principale (12) ayant une profondeur (d) plus grande que celle de la partie extérieure (11) et coupant le deuxième bord de bande de roulement (T2) et le troisième bord de bande de roulement (T3).

5. Bandage pneumatique selon la revendication 1, 2, 3 ou 4,
dans lequel un angle de ladite première rainure inclinée (6) par rapport à la direction axiale de pneumatique mesuré sur le troisième bord de bande de roulement (T3) est plus grand qu'un angle de ladite première rainure inclinée (6) par rapport à la direction axiale de pneumatique mesuré sur le premier bord de bande de roulement (T1).

6. Bandage pneumatique selon l'une quelconque des revendications 1 à 5,
dans lequel ladite zone d'épaulement (5) est pourvue d'une seconde rainure inclinée (7) qui est inclinée par rapport à la direction axiale de pneumatique, et coupe le deuxième bord de bande de roulement (T2) et le troisième bord de bande de roulement (T3) mais ne coupe pas le premier bord de bande de roulement (T1).

7. Bandage pneumatique selon la revendication 6, dans lequel
ladite seconde rainure inclinée (7) comprend une première partie (16), dans laquelle la profondeur de rainure est réduite vers l'intérieur dans la direction axiale de pneumatique, et qui coupe le troisième bord de bande de roulement (T3).

8. Bandage pneumatique selon la revendication 6 ou 7, dans lequel
ladite seconde rainure inclinée (7) comprend une seconde partie (17), dans laquelle la profondeur de rainure est constante le long de la direction longitudinale de la seconde rainure inclinée (7), et qui coupe le second bord de bande de roulement (T2).

9. Bandage pneumatique selon l'une quelconque des revendications 6 à 8,
dans lequel la longueur dans la direction axiale de pneumatique de ladite seconde rainure inclinée (7) est dans une plage de 40 % à 60 % de la longueur dans la direction axiale de pneumatique de ladite première rainure inclinée (6).
